# EUROPEAN PATENT APPLICATION

(11) **EP 1 557 447 A1**
(43) Date of publication of application: **27.07.2005**
(21) Application number: 03769940.2
(22) Date of filing: 29.10.2003
(51) Int. Cl.: C08L 101/00, C08K 9/02, B32B 27/18, G02B 1/10

(54) **CURING COMPOSITION AND ANTIREFLECTIVE MULTILAYER BODY USING SAME**

(30) Priority: 29.10.2002 JP 2002314199
(71) Applicant: JSR Corporation, Tokyo 104-8410 (JP)
(72) Inventor: HONDA, Miwa c/o JSR Corporation, Tokyo 104-8410 (JP); SHIMOMURA, Hiroomi c/o JSR Corporation, Tokyo 104-8410 (JP); YAMAMURA, Tetsuya c/o JSR Corporation, Tokyo 104-8410 (JP); SUGIYAMA, Naoki c/o JSR Corporation, Tokyo 104-8410 (JP); ERIYAMA, Yuichi c/o JSR Corporation, Tokyo 104-8410 (JP); TANABE, Takayoshi c/o JSR Corporation, Tokyo 104-8410 (JP)
(74) Representative: Leson, Thomas Johannes Alois, Dipl.-Ing.
(86) International application number: PCT/JP2003/013827
(87) International publication number: WO 2004/039891

(57) **Abstract**

A curing composition including: 100 parts by weight of (1) titanium oxide particles coated with oxide of one or more metal elements selected from the group consisting of silicon, aluminum, titanium, zirconium, tin, antimony and zinc, 1 to 150 parts by weight of (2) a curing compound, and 0.1 to 100 parts by weight of (3) a curing catalyst. An antireflective multilayer body (16) which successively includes, on a substrate layer (12), a high-refractive-index film (10) which is formed by curing this curing composition and has a refractive index of 1.60 or more and a low-refractive-index film (14) having a lower refractive index than that thereof exhibits excellent antireflection effect in the field in which an antireflection film is used.

## Description

### Technical Field

The present invention relates to a curing composition and an antireflective multilayer body using the same. More specifically, the invention relates to a curing composition capable of yielding a cured film which has a refractive index of 1.60 or more and is excellent in light resistance, and an antireflective multilayer body excellent in antireflection, using the same.

### Related Art

For example, thermosetting polysiloxane compositions are known as materials for forming an antireflection film (see, for example, Japanese Patent Application Laid-open No. 61-247743, Japanese Patent Application Laid-open No. 6-25599, Japanese Patent Application Laid-open No. 7-331115, and Japanese Patent Application Laid-open No. 10-232301).

However, since it is necessary to subject the antireflection film obtained from a thermosetting polysiloxane composition to heating treatment at high temperature for a long time, the film has problems that the film is low in productivity and the kind of a substrate to which the film is applied is restrictive. Since the thermosetting polysiloxane composition is poor in storage stability, the composition also has a problem that the composition is generally used as a two-liquid type one, in which a main agent and a curing compound are separated, and is troublesome to handle.

Thus, there is suggested an optically functional film comprising, on a substrate, the following membranes which are successively laminated: a high-refractive-index membrane (refractive index = 1.6 or more) in which fine particles are localized in a high-reflective-index binder resin; and a low-refractive-index membrane (refractive index = less than 1.6) comprising a fluorine-containing copolymer (see, for example, Japanese Patent Application Laid-open No. 8-94806).

More specifically, in order to form the high-refractive-index membrane, a fine particle layer made of metal oxide particles or the like, having a size of 200 nm or less, is beforehand formed on a process paper sheet and the resultant is compressed onto a high-refractive-index binder resin on a substrate, thereby embedding and localizing the fine particle layer into the high-refractive-index binder resin.

About the low-refractive-index membrane, a thin membrane having a membrane thickness of 200 nm or less is obtained by curing a resin composition comprising; 100 parts by weight of a fluorine-containing copolymer which has a fluorine content of 60 to 70% by weight and is obtained by copolymerizing a monomer composition containing 30 to 90% by weight of vinylidene fluoride and 5 to 50% by weight of hexafluoropropylene; 30 to 150 parts by weight of a polymerizable compound having an ethylenic unsaturated group; and a polymerization initiator, the amount of which is from 0. 5 to 10 parts by weight for 100 parts by weight of the total of the above-mentioned components.

However, this optically functional film has a problem that curing reaction therefor is easily affected by oxygen (air) present in the surroundings to result in curing failure easily since the polymerization initiator is used in the low-refractive-index material.

Also about the high-refractive-index membrane, the step of producing the membrane is complicated. As a result, forming a stable optically functional film is difficult.

Furthermore, there arises a problem that the high-refractive-index material is poor in storage stability since the kind of a compound or the kind of a curing compound used in the high-refractive-index material is unsuitable.

This optionally functional film also has problems that affinity between the low-refractive-index membrane and the high-refractive-index membrane therein is not good so that the film is insufficient in antireflection and the membranes are easily peeled off on the interface therebetween.

On the other hand, disclosed is a high-refractive-index material for antireflection film, having a refractive index of about 1.7 and improved storage stability in which zirconium oxide is used for metal oxide particles (see, for example, Japanese Patent Application Laid-open No. 2000-186216).

It is suggested that titanium oxide particles, which are metal oxide particles having a high refractive index, are used in the above-mentioned optically functional film and high-refractive-index material for antireflection film in order to make the refractive index thereof larger.

However, since titanium oxide particles generally have photocatalytic capability, antireflection films containing such metal oxide particles have a problem that the light resistance thereof deteriorates.

Thus, it has been desired to develop a high-refractive-index material for antireflection film which overcomes such drawbacks, contains titanium oxide particles and has excellent light resistance.

An object of the present invention is to provide a curing composition capable of yielding a cured film having a high refractive index and an excellent light resistance, and an antireflective multilayer body which uses this composition and has an excellent antireflection.

The eager investigations by the present inventors have revealed that the above-mentioned problems can be solved by using, as a high-refractive-index material, a curing composition in which 1) titanium oxide particles coated with oxide of one or more metal elements selected from the group consisting of silicon, aluminum, titanium, zirconium, tin, antimony and zinc (hereinafter referred to as "coated titanium oxide particles"), (2) a curing compound, and (3) a curing catalyst are mixed in added amounts within given ranges, or a curing composition in which (4) a hydroxyl-containing compound is further mixed therewith in an added amount within a given range.

### Disclosure of the Invention

According to a first aspect of the present invention, provided is a curing composition including: 100 parts by weight of (1) coated titanium oxide particles, 1 to 300 parts by weight of (2) a curing compound, and 0.1 to 30 parts by weight of (3) a curing catalyst. This curing composition preferably comprises 1 to 150 parts by weight of (4) a hydroxyl-containing compound.

The use of the (1) coated titanium oxide particles makes it possible to adjust the refractive index of a cured film to 1.60 or more on the basis of the addition of a relatively small amount thereof. The coated titanium oxide particles have an advantage that the particles have high transparency (small colorability).

By making such a curing composition, a cured film which has a refractive index of 1. 60 or more and is excellent in light resistance (high-refractive-index film) can be obtained. Such a high-refractive-index film made from the curing composition is good in affinity with a low-refractive-index film and is excellent in antireflection and adhesiveness.

In the curing composition of the present invention, it is preferable that the (2) curing compound is a melamine compound, the (3) curing catalyst is an aromatic sulfonic acid or aromatic sulfonic acid salt, and the (4) hydroxyl-containing compound is polyvinyl butyral resin.

The use of the melamine compound as the (2) curing compound makes it possible to improve the storage stability of the curing composition, and further cure the composition at a relatively low temperature, for example, 20 °C or lower for a short time.

The use of the polyvinyl butyral resin as the (4) hydroxyl-containing compoundmakes it easy to disperse the coated titanium oxide particles uniformly when the curing composition is prepared. The use thereof also makes it possible to improve the adhesiveness of the resultant high-refractive-index film to the substrate layer and the low-refractive-index film and the mechanical properties thereof.

Preferably, this curing composition further comprises 100 to 10000 parts by weight of an organic solvent.

According to a second aspect of the present invention, provided is an antireflective multilayer body having a cured film which has a refractive index of 1.60 or more and is formed by curing the above-mentioned curing composition.

According to a third aspect of the present invention, provided is an antireflective multilayer body including a substrate layer and the above-mentioned cured film (high-refractive-index film), thereby having a cured film of a low refractive index (low-refractive-index film).

An excellent antireflection, for example, a reflectance of 1% or less can be obtained when the composition contains such a high-refractive-index film and this film is combined with the low-refractive-index film. This high-refractive-index film has a good affinity with the low-refractive-index film and is excellent in adhesiveness thereto and light resistance.

In the antireflective multilayer body of the present invention, it is preferable that a low-refractive-index film formed by curing a low-refractive-index material containing a fluorine-containing polymer in formed on the high-refractive-index film and further the refractive index of the low-refractive-index film is set to less than 1.60.

This makes better the adhesiveness between the high-refractive-index film and the low-refractive-index film so that a better antireflection, for example, a reflectance of 1% or less can be obtained.

A preferable example of the fluorine-containing polymer is a cured body of a composition containing the following components: (A) a fluorine-containing polymer having a hydroxyl group, (B) a curing compound having a functional group reactive with a hydroxyl group and (C) a curing catalyst.

In the antireflective multilayer body of the present invention, it is preferable that the high-refractive-index film and the low-refractive-index film are formed by curing a curing compound of the same kind. That is, it is preferable that a curing compound of the same kind is contained in the high-refractive-index material and the low-refractive-index material.

This makes the affinity between the high-refractive-index film and the low-refractive-index film better, so that a better antireflection and adhesiveness can be obtained.

Examples of the curing compound of the same kind include melamine compounds such as melamine compounds containing a hydroxylalkylated amino group, and melamine compounds containing an alkoxyalkylated amino group.

The shape of the substrate layer is usually a film, plate or lens shape.

According to the curing composition of the present invention, a cured film which has a high refractive index and a good light resistance is obtained. According to the antireflective multilayer body of the invention, a good antireflection is obtained. Furthermore, according to the antireflective multilayer body of the invention in which a high-refractive-index layer made of the cured film of the invention is combined with a specific low-refractive-index layer, a better antireflection can be obtained, for example, a reflectance of 1.0% or less can be obtained.

### Brief Description of the Drawings

Fig. 1 is a sectional view of an antireflective multilayer body according to an embodiment of the present invention.
Fig. 2 is a sectional view of an antireflective multilayer body according to another embodiment of the present invention.

### Best Mode for Carrying Out the Invention

The following specifically describes an embodiment (first embodiment) about the curing composition of the present invention, and embodiments (second and third embodiments) about the antireflective multilayer body thereof.

### [First Embodiment]

The curing composition of the present invention comprises 100 parts by weight of (1) coated titanium oxide particles, 1 to 300 parts by weight of (2) a curing compound, and 0.1 to 30 parts by weight of (3) a curing catalyst.

### (1) Coated titanium oxide particles

The coated titanium oxide particles are titanium oxide particles coated with oxide of one or more metal elements selected from the group consisting of silicon, aluminum, titanium, zirconium, tin, antimony and zinc. The method of coating the titanium oxide particles is not particularly limited. However, an example thereof is a method of treating titanium oxide particles in a solution of a given metal salt in a manner described in, for example, "Titanium Oxide Physical Property and Applied Technique" (written by Manabu Kiyono), GIHODO SHUPPAN Co. , Ltd. , pp. 28-31 (1991), thereby coating the particles with metal hydroxide, and subsequently firing the resultant. In this case, almost all of the metal hydroxide turns into metal oxide by the firing. For this reason, in the present invention, the concept of the coated titanium oxide particles is a concept which also includes an embodiment in which metal hydroxide remains in the metal oxide which constitutes the coating portion.

The word "coated" is not necessarily limited to an embodiment in which the entire surface of the titanium oxide particles is coated with the metal oxide, but also means an embodiment in which the titanium oxide particles are coated with a dense or porous film. Also, the coated titaniumoxide particles are not limited to particles having a coating layer separated definitely from titanium oxide particles, but also include particles in which the above-mentioned metal oxide or metal hydroxide is present mainly in the vicinity of the outer shells of particles so that a coating layer and the titanium oxide particles do not form a definitely-separated layer.

The coating can be performed by oxide of two or more metal elements out of the above-mentioned oxides of metal elements. In this case, coatings based on the respective metal oxides may form coating layers, or oxides of two or more metal elements co-precipitate to form a single coating layer.

When the above-mentioned metal oxide contains zirconia, a small added amount of particles thereof makes it possible to obtain a high refractive index. Therefore, the metal oxide is preferred since a cured film having a high refractive index can be obtained without damaging the transparency of the cured film.

The number-average particle size of the coated titanium oxide particles (the primary particle size thereof when the particles aggregate) is preferably 0.1 µm or less. If the number-average particle size is more than 0.1 µm, it may become difficult to disperse the coated titanium oxide particles uniformly. Moreover, the coated titanium oxide particles precipitate easily so that the storage stability thereof may become insufficient. Furthermore, the transparency of the resultant cured film may lower or the turbidity (haze value) thereof may rise. The number-average particle size is more preferably from 0.01 to 0.08 µm, even more preferably from 0.02 to 0.05 µm.

The use of such coated titanium oxide particles makes it possible to restrain the photocatalytic activity of titanium oxide and suppress the decomposition of the cured material. As a result, a cured film having a high refractive index and an excellent light resistance can be obtained.

### (2) Curing compound

The curing compound may be only one from or a combination of two or more frommelamine compounds, urea compounds, guanamine compounds, phenol compounds, epoxy compounds, isocyanate compounds, polybasic acids and others.

Among these, melamine compounds having, in the molecule thereof, a methylol group and an alkoxylated methyl group, or two or more of any one of methylol groups or alkoxylated methyl groups are the most preferable since the compounds are relatively good in storage stability and can be cured at a relatively low temperature. Among these melamine compounds, more preferable are methylated melamine compounds such as hexamethyl-etherized methylolmelamine compounds, hexabutyl-etherized methylolmelamine compounds, methyl-butyl-mix-etherized methylolmelamine compounds, methyl-etherized methylolmelamine compounds, and butyl-etherized methylolmelamine compounds.

The added amount of the curing compound is from 1 to 300 parts by weight, preferably from 10 to 250 parts by weight for 100 parts by weight of the coated titanium oxide particles. If the added amount is less than 1 part by weight, the mechanical strength of the resultant coating film lowers. On the other hand, if the added amount is more than 300 parts by weight, the storage stability of the curing composition lowers.

### (3) Curing catalyst

Any catalyst for promoting the reaction of the curing compound can be used as the curing catalyst. More specific examples thereof include aliphatic sulfonic acids, aliphatic sulfonic acid salts, aliphatic carboxylic acids, aliphatic carboxylic acid salts, aromatic sulfonic acids, aromatic sulfonic acid salts, aromatic carboxylic acids, aromatic carboxylic acid salts, metal salts, and phosphates, which may be used alone or in combination of two or more thereof.

Among these, aromatic sulfonic acids are the most preferable since the curing speed of the curing compound such as a methylated melamine compound can be made better.

The added amount of the curing catalyst is from 0.1 to 30 parts by weight, preferably from 0.5 to 30 parts by weight, and more preferably from 0.5 to 20 parts by weight for 100 parts by weight of the coated titanium oxide particles. If the added amount is less than 0.1 part by weight, the effect of the curing catalyst addition is not exhibited. On the other hand, if the added amount is more than 30 parts by weight, the storage stability of the curing composition lowers.

### (4) Hydroxyl-containing compound

It is desired that a hydroxyl-containing compound is added to the curing composition of the invention. A polymer having in the molecule thereof a hydroxyl group can be preferably used as the hydroxyl-containing compound. More specific examples thereof include polyvinyl acetal resins (polyvinyl butyral resin and polyvinyl formal resin), polyvinyl alcohol resins, polyacrylic type resins, polyphenolic type resins, and phenoxy resins, which may be used alone or in combination of two or more thereof.

Among these, polyvinyl butyral resins, (which may be modifiedpolyvinylbutyral resins), are the most preferable since the resins are excellent in adhesiveness to the substrate layer and mechanical properties and the coated titanium oxide particles are uniformly dispersed therein with relative ease. Among the polyvinyl butyral resins, more preferable are resins having the following physical properties: an average polymerization degree of 1, 000 or less, a content of polyvinyl alcohol units in a single molecule of 18% or more by weight, and a glass transition temperature of 70 °C or higher.

The added amount of the hydroxyl-containing compound is preferably from 1 to 150 parts by weight for 100 parts by weight of the coated titanium oxide particles. When the amount is 1 part or more by weight, the adhesiveness to the substrate layer and the mechanical properties are improved. On the other hand, when the amount is 150 parts or less by weight, a relatively sufficient amount of the coated titanium oxide particles can be maintained. Thus, a sufficient refractive index property of the cured film after the composition is cured can be obtained.

The added amount of the hydroxyl-containing compound is more preferably from 1 to 50 parts by weight, even more preferably from 1 to 30 parts by weight.

### (5) Organic solvent

It is preferable to add an organic solvent to the curing composition. The addition of an organic solvent makes it possible to form a thin cured film uniformly. Examples of such an organic solvent include methyl isobutyl ketone, methyl ethyl ketone, methanol, ethanol, t-butanol, isopropanol, ethyl lactate, propylene glycol monomethyl ether, and n-butanol, which may be used alone or in combination of two or more thereof. A preferable solvent depends on the method of applying the curing composition. In the case of using a dipping method or casting method, preferable is one or a combination of two or more out of methyl isobutyl ketone, methyl ethyl ketone, methanol, ethanol, t-butanol, isopropanol and others since it gives a good applying power. In the case of using a spin coating method, preferable is ethyllactate, propylene glycol monomethyl ether, or n-butanol since it gives a good applying power.

The added amount of the organic solvent is not particularly limited, and is preferably from 100 to 10,000 parts by weight for 100 parts by weight of the coated titanium oxide particles. If the added amount is less than 100 parts by weight, the viscosity of the curing composition may not be adjusted with ease. On the other hand, if the added amount is more than 20,000 parts by weight, the storage stability of the curing composition may lower and the composition may have an excessively low viscosity so as not to be handled with ease.

The added amount of the organic solvent is more preferably from 300 to 10,000 parts by weight, even more preferably from 500 to 5,000 parts by weight.

### (6) Additives

As long as the objects or advantageous effects of the invention are not damaged, additives can be further incorporated into the curing composition, examples of the additives including a radical photopolymerization initiator, an optical sensitizer, a polymerization inhibitor, a polymerization initiation aid, a leveling agent, a wettability improver, a surfactant, a plasticizer, an ultraviolet absorbent, an antioxidant, an antistatic agent, a silane coupling agent, an inorganic filler, a pigment, and a dye.

### (7) Refractive index

The refractive index (refractive index about the Na-D line at a measuring temperature of 25 °C) of the cured film (high-refractive-index film) formed by curing the curing composition of the invention is 1. 60 or more. If the refractive index is less than 1.60, the combination of the film with a low-refractive-index film gives a remarkably low antireflection effect. The refractive index is more preferably from 1.60 to 2.20, even more preferably from 1. 65 to 2.20. If the refractive index is more than 2.20, the kind of the material that can be used may be excessively limited.

When a plurality of the high-refractive-index films are formed, it is sufficient that at least one thereof has a refractive index within the above-mentioned range. Accordingly, the other high-refractive-index film(s) may have a refractive index of less than 1.60.

### [Second Embodiment]

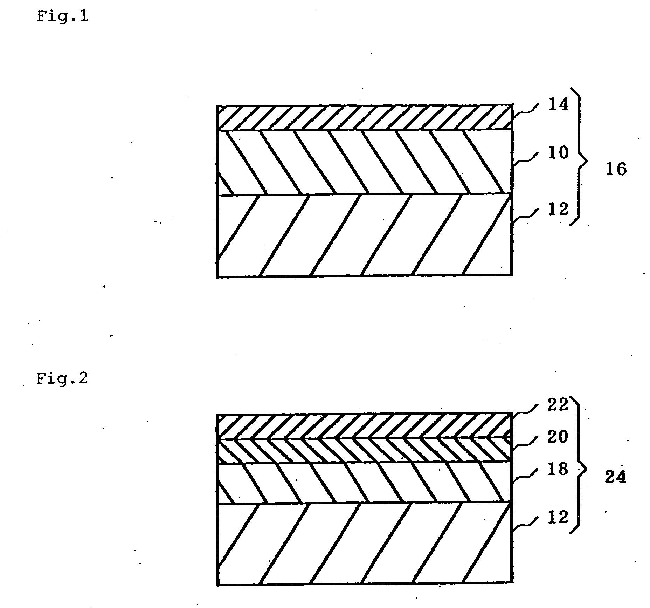

As illustrated in Fig. 1, the second embodiment of the invention is an antireflective multilayer body 16 which successively comprises, on a substrate layer 12, a high-refractive-index film 10 obtained from the curing composition and a low-refractive-index film 14 obtained from a low-refractive-index material. In this antireflective multilayer body 16, since no hard coat layer is formed and the high-refractive-index film 10 ensures the function of a hard coat layer, the structure of the antireflective multilayer body 16 becomes simple and the antireflective multilayer body 16 can be formed with a high precision. The second embodiment is specifically described hereinafter.

### (1) High-refractive-index material

The curing composition used in the second embodiment, the value of the refractive index of the high-refractive-index film, and others are equivalent to those in the first embodiment. Thus, specific description thereon will not be repeated herein.

### (2) Low-refractive-index material

The low-refractive-index material for forming the low-refractive-index film is preferably composed of 100 parts by weight of (A) a fluorine-containing polymer having a hydroxyl group, 1 to 70 parts by weight of (B) a curing compound having a functional group reactive with a hydroxyl group, 0.1 to 15 parts by weight of (C) a curing catalyst, and 500 to 10, 000 parts by weight of (D) an organic solvent.

As the (A) fluorine-containing polymer having a hydroxyl group, any fluorine-containing polymer having in the molecule thereof a hydroxyl group can be preferably used. More specifically, the polymer can be obtained by copolymerizing a monomer containing a fluorine atom (a component) with a monomer containing a hydroxyl group (b component). It is preferable to add thereto an ethylenic unsaturated monomer (c component) other than the a component and the b component, if necessary.

Preferable examples of the monomer containing a fluorine atom, which is the a component, include tetrafluoroethylene, hexafluoropropylene, vinylidene fluoride, chlorotrifluoroethylene, trifluoroethylene, tetrafluoroethylene, (fluoroalkyl) vinyl ether, (fluoroalkoxyalkyl) vinyl ether, perfluoro (alkyl vinyl ether), perfluoro(alkoxyvinyl ether), fluorine-containing (meth)acrylic acid ester, which may be used alone or in combination of two or more thereof.

The blended amount of the a component is not particularly limited. For example, the amount is preferably from 10 to 99% by mole, more preferably from 15 to 97% by mole.

Preferable examples of the monomer containing a hydroxyl group, which is the b component, include hydroxyethyl vinyl ether, hydroxypropyl vinyl ether, hydroxybutyl vinyl ether, hydroxypentyl vinyl ether, hydroxyhexyl vinyl ether, hydroxyethyl allyl ether, hydroxybutyl allyl ether, glycerol monoallyl ether, allyl alcohol, and hydroxyethyl(meth)acrylic acid esters, which may be used alone or in combination of two or more thereof.

The blended amount of the b component is not particularly limited. For example, the amount is preferably from 1 to 20% by mole, more preferably from 3 to 15% by mole.

The viscosity of the (A) fluorine-containing polymer having a hydroxyl group is preferably decided, considering the applying power thereof and the mechanical strength of the low-refractive-index film. For example, the intrinsic viscosity (at a measuring temperature of 25 °C, using a solvent of N,N-dimethylacetoamide) is set preferably into the range of 0.05 to 2.0 dl/g, more preferably into the range of 0.1 to 1.5 dl/g. By setting the viscosity into such a range, excellent mechanical strength and applying power can be obtained in the low-refractive-index film.

The polymerization method for giving such an intrinsic viscosity is not particularly limited, and the following can be adopted: a solvent polymerization, suspension polymerization, emulsion polymerization or bulk polymerization method using a radical polymerization initiator, or some other method.

As the curing compound (B), which has a functional group reactive with a hydroxyl group, the same curing compound as in the high-refractive-index material can be used. It is preferable to use, for example, a melamine compound having, in the molecule thereof, a methylol group and an alkoxylated methyl group, or two or more of any one of methylol groups or alkoxylated methyl groups.

It is preferable that the kind of the curing compound in the low-refractive-index material is made equal to that of the curing compound in the high-refractive-index material. That is, it is preferable that the high-refractive-index film and the low-refractive index film are each a film formed by curing a curing compound of the same kind. This makes affinity between the high-refractive-index film and the low-refractive-index film better so that better antireflection and adhesiveness can be obtained.

Examples of the curing compound of the same kind include the above-mentionedmelamine compounds. More specific examples thereof include melamine compounds which have a hydroxylalkylated amino group, and melamine compounds which have an alkoxyalkylated amino group.

The kind and the added amount of the curing catalyst (C) and the organic solvent (D) are the same as those in the high-refractive-index material. Thus, description thereon will not be repeated.

As the refractive index (the refractive index about the Na-D line at a measuring temperature of 25 °C) in the low-refractive-index film is lower, the combination of the film with the high-refractive-index film gives a better antireflection effect. Specifically, the refractive index is preferably less than 1. 60. If the refractive index is more than 1. 60, the combination of the film with the high-refractive-index film may give a remarkably low antireflection effect. The refractive index of the low-refractive-index film is more preferably from 1. 30 to 1. 60, more preferably from 1.30 to 1.50. If the refractive index is less than 1. 30, the kind of the material that can be used may be excessively limited.

When a plurality of the low-refractive-index films are formed, it is sufficient that at least one thereof has a refractive index within the above-mentioned range. Accordingly, the other low-refractive-index film(s) may have a refractive index of more than 1.60.

When the low-refractive-index film is formed, it is preferable to set the difference of the refractive index of the film from that of the high-refractive-index film to 0. 05 or more since a better antireflection effect can be obtained. If the refractive index difference is less than 0.05, synergistic effects based on these antireflection films cannot be obtained. Conversely, the antireflection effect may lower. The refractive index difference is preferably from 0.1 to 0.8, more preferably from 0.15 to 0.7.

The following describes the thicknesses of the high-refractive-index film and the low-refractive-index film. First, the thickness of the high-refractive-index film is not particularly limited. For example, the thickness is preferably from 50 to 30,000 nm. If the thickness of the high-refractive-index film is less than 50 nm, the combination of the film with the low-refractive-index film may give a low antireflection effect and a low adhesiveness thereof to the substrate layer. On the other hand, if the thickness is more than 30,000 nm, light interference is generated. Conversely, the antireflection effect may lower. The thickness of the high-refractive-index film is more preferably from 50 to 1, 000 nm, even more preferably from 60 to 500 nm.

In order to obtain a higher antireflection effect when a plurality of the high-refractive-index films are formed, it is advisable to set the total thickness thereof into the range of 50 to 30,000 nm.

When a hard coat layer is interposed between the high-refractive-index film and the substrate layer, the thickness of the high-refractive-index film can be set into the range of 50 to 300 nm.

The thickness of the low-refractive-index film is not particularly limited either, and is preferably from, for example, 50 to 300 nm. If the thickness of the low-refractive-index film is less than 50 nm, the adhesiveness thereof to the high-refractive-index film as an undercoat may lower. On the other hand, if the thickness is more than 300 nm, light interference is generated so that the antireflection effect may lower. The thickness of the low-refractive-index film is more preferably from 50 to 250 nm, even more preferably from 60 to 200 nm.

In order to obtain a higher antireflection effect when a plurality of the low-refractive-index films are formed, it is advisable to set the total thickness thereof into the range of 50 to 300 nm.

The following describes the substrate layer on which the high-refractive-index film, the hard coat layer or the like is formed. The kind of this substrate layer, on which the high-refractive-index film or the like is formed, is not particularly limited. The substrate layer may be, for example, a substrate layer made of glass, polycarbonate resin, polyester resin, acrylic resin, triacetyl acetate resin (TAC) or the like. The shape of the substrate layer is not particularly limited. Examples thereof include the shape of a flat plate such as a film or a plate, the shape of a curved surface such as a CRT surface, and the shape of a spherical or nonspherical lens such as a micro-lens. The formation of an antireflective multilayer body including these substrate layers makes it possible to give an excellent antireflection effect in a wide field in which an antireflection film is used, for example, various optical lenses such as a Fresnel lens, a lenticular lens and a micro-lens array of a CCD, a lens section in a camera, a screen display section of a television (CRT), and a color filter of a liquid crystal display device.

When the high-refractive-index film and the low-refractive-index film are formed from the high-refractive-index material and the low-refractive-index material, respectively, it is preferable to apply coating to the substrate layer (the member to be applied). As such coating, the following methods can be used: dipping, spraying, bar coating, roll coating, spin coating, curtain coating, gravure printing, silk screen printing, ink-jet printing or the like. An appropriate coating method is decided in accordance with the size of the substrate layer, an obj ect to which the antireflective multilayer body is to be applied, and others. When the antireflective multilayer body is applied to, for example, a large-area display device, the use of dipping is preferable for workability. When the antireflective multilayer body is applied to, for example, a micro-lens array, spin coating is superior since a uniform cured film is easily obtained.

Means for curing the high-refractive-index material or the low-refractive-index material is not particularly limited. For example, the heating thereof is preferable. In this case, it is preferable to heat the material at 30 to 200 °C for 1 to 180 minutes. The heating in this way makes it possible to yield an antireflective multilayer body excellent in antireflection more effectively without damaging the substrate layer or the antireflection film to be formed. The material is heated preferably at 50 to 180 °C for 2 to 120 minutes, more preferably at 80 to 150 °C for 5 to 60 minutes.

In the case of using, for example, a melamine compound as the curing compound, the degree of the curing of the high-refractive-index material or the low-refractive-index material can be quantitatively checked by analyzing the amount of a methylol group or alkoxylated methyl group by infrared spectroscopy or measuring the gelation ratio thereof with a Soxhlet extractor.

### [Third Embodiment]

As illustrated in Fig. 2, the third embodiment is an antireflective multilayer body 24 which successively comprises, on a substrate layer 12, a hard coat layer 18, a high-refractive-index film 20, and a low-refractive-index film 22, in which the hard coat layer 18 is interposed between the substrate layer 12 and the high-refractive-index film 20. The interposition of the hard coat layer 18 makes it possible to improve the adhesiveness of the high-refractive-index film 20 to the substrate layer 12 further. The mechanical property of the hard coat layer 18 also makes it possible to improve the endurance of the antireflective multilayer body 24 further.

The following describes the hard coat layer, which is a characteristic of the third embodiment. The substrate layer, the high-refractive-index film and the low-refractive-index film, or methods for forming them are the same as those in the second embodiment. Thus, description thereon will not be repeated herein.

The hard coat layer is preferably made of, for example, SiO₂, epoxy resin, acrylic resin, or melamine resin.

The thickness of the hard coat layer is not particularly limited. Specifically, the thickness is preferably from 1 to 50 µm, more preferably from 5 to 10 µm. If the thickness is less than 1 µm, the adhesiveness of the antireflection film to the substrate layer may not be improved. On the other hand, if the thickness is more than 50 µm, it may be difficult to form the hard coat layer uniformly.

### [Examples]

Examples of the invention are described in detail hereinafter. However, the scope of the invention is not limited by these examples.

### Production Example 1

### [Preparation of a coated titanium oxide particle dispersion-1]

The following were added: 3.5 parts by weight of titanium oxide fine powder coated with silica, 0. 6 part by weight of Denka Butyral #2000-L (polyvinyl butyral resin manufactured by DENKI KAGAKU KOGYO KABUSHIKI KAISHA, average polymerization degree: about 300, polyvinyl alcohol units in the single molecule: 21% or more by weight, a glass transition point (Tg): 71 °C, PVB #2000L), 12 parts by weight of methyl isobutyl ketone (MIBK), and 8 parts by weight of t-butanol. The particles were dispersed with glass beads for 10 hours, and then the glass beads were removed to yield 24 parts by weight of a silica-coated titanium oxide particle dispersion-1. The resultant coated titanium oxide particle dispersion-1 was weighed on an aluminum plate, and dried on a hot plate of 120 °C temperature for 1 hour. The concentration of all solid contents therein was measured. The concentration was 17% by weight. This silica-coated titanium oxide particle dispersion-1 was weighed into a magnetic crucible, and then pre-dried on a hot plate of 80 °C temperature for 30 minutes. Thereafter, the resultant was fired in a muffle furnace of 750 °C temperature for 1 hour. From the amount of the resultant inorganic residues and the concentration of all solid contents therein, the amount of inorganic materials in all the solid contents was calculated. The amount was 85% by weight.

### Production Example 2

### [Preparation of a coated titanium oxide particle dispersion-2]

The following were added: 3.5 parts by weight of titanium oxide fine powder coated with silica, 0.6 part by weight of ethylene oxide/propylene oxide copolymer (average polymerization degree: about 20), 12 parts by weight of MIBK, and 8 parts by weight of t-butanol. The particles were dispersed with glass beads for 10 hours, and then the glass beads were removed to yield 24 parts by weight of a silica-coated titanium oxide particle dispersion-2. The concentration of all solid contents in this coated titanium oxide particle dispersion-2 and the amount of inorganic materials in all the solid contents were measured in the same way as in Production Example 1. The concentration and the amount were 17% by weight and 85% by weight, respectively.

### Production Example 3

### [Preparation of a coated titanium oxide particle dispersion-3]

The following were added: 3.5 parts by weight of titanium oxide fine powder coated with zirconia and alumina, 0.6 part by weight of ethylene oxide/propylene oxide copolymer (average polymerization degree: about 20), 20 parts by weight of propylene glycol monomethyl ether. The particles were dispersed with glass beads for 10 hours, and then the glass beads were removed to yield 24 parts by weight of a coated titanium oxide particle dispersion-3. The concentration of all solid contents in this coated titanium oxide particle dispersion-3 and the amount of inorganic materials in all the solid contents were measured in the same way as in Production Example 1. The concentration and the amount were 17% by weight and 85% by weight, respectively.

### Comparative Production Example 1

### [Preparation of a rutile type titanium oxide particle dispersion]

A rutile type titanium oxide particle dispersion was prepared in the same way as in Production Example 2 except that rutile type titanium oxide fine powder was used instead of the titanium oxide fine powder coated with silica. The concentration of all solid contents in this rutile type titanium oxide particle dispersion and the amount of inorganic materials in all the solid contents were measured in the same way as in Production Example 1. The concentration and the amount were 17% by weight and 85% by weight, respectively.

### Comparative Production Example 2

### [Preparation of an anatase type titanium oxide particle dispersion]

An anatase type titanium oxide particle dispersion was prepared in the same way as in Comparative Production Example 1 except that anatase type titanium oxide fine powder was used instead of the rutile type titanium oxide fine powder. The concentration of all solid contents in this anatase type titanium oxide particle dispersion and the amount of inorganic materials in all the solid contents were measured in the same way as in Production Example 1. The concentration and the amount were 17% by weight and 85% by weight, respectively.

### Production Example 4

### [Production of a fluorine-containing polymer]

An autoclave having an internal volume of 1.5 L, made of stainless steel and equipped with an electromagnetic stirrer, was sufficiently purged with nitrogen gas, and then thereto were added 500 g of ethyl acetate, 43.2 g of perfluoro(propyl vinyl ether) (FPVE), 41.2 g of ethyl vinyl ether (EVE), 21.5 g of hydroxyethyl vinyl ether (HEVE), 40.5 g of an "Adekaria Soap (transliteration) NE-30" (manufactured by Asahi Denka Co., Ltd.) as a nonionic reactive emulsifier, 6.0 g of a "VPS-1001" (manufactured by Wako Pure Chemical Industries, Ltd.) as azo-group-containing polydimethylsiloxane, and 1.25 g of lauroyl peroxide. The mixture was cooled with dry ice/methanol to -50 °C, and subsequently oxygen in the system was again removed with nitrogen.

Next, thereto was added 97. 4 g of hexafluoropropylene (HFP), and the temperature of the mixture was started to be raised. When the temperature of the inside of the autoclave reached 60 °C, the pressure therein was 5.3 x 10⁵ Pa. Thereafter, the reaction was continued at 70 °C for 20 hours under stirring. When the pressure lowered to 1.7 x 10⁵ Pa, the autoclave was cooled with water to quench the reaction. After the temperature reached room temperature, unreacted monomers were discharged and the autoclave was opened to yield a polymer solution having a solid content concentration of 26.4%. The resultant polymer solution was poured into methanol to precipitate a polymer. The polymer was washed with methanol, and was vacuum-dried at 50 °C to yield 220 g of a fluorine-containing polymer.

About the resultant polymer, it were proved that the number-average molecular weight (Mn) thereof relative to standard polystyrene by gel permeation chromatography (GPC) was 48, 000, and the glass transition point (Tg) by DSC was 26.8 °C, and the fluorine content by percentage by the Alizarin Complexone method was 50.3%.

### Production Example 5

### [Preparation of a low-refractive-index curing composition]

Into 900 g of a solvent of MIBK was dissolved 100 g of the fluorine-containing polymer obtained in Production Example 4 together with 30 g of a methoxylated methyl melamine "Cymel 303" (manufactured by Mitsui Cytec, Inc.) as a curing compound, and then the components were caused to react with each other at 100 °C for 5 hours under stirring. In this way, a reaction solution was obtained. To 900 g of MIBK were added 100g of the resultant reaction solution and 2 g of a Catalyst 4050 (cat 4050) (an aromatic sulfonic acid compoundmanufacturedbyMitsui Cytec, Inc., solid content concentration: 32% by weight) as a curing catalyst, so as to dissolve the solid components in the solvent, thereby preparing a low-refractive-index curing composition. This solution of the curing composition in MIBK was applied onto a silicon wafer with a spin coater to have a thickness of about 0.1 µm after being dried. Next, an oven was used to heat the resultant at 120 °C for 60 minutes to yield a low-refractive-index cured film. About the resultant cured film, the refractive index (n_{D}²⁵) thereof about a wavelength of 589 nm was measured at 25 °C with an ellipsometer. The refractive index was 1.41.

The following describes preparation examples of the curing composition (high-refractive-index curing composition) of the invention in Examples 1 to 11 and Comparative Examples 1 to 4.

### Example 1

Into a vessel were charged 24 parts by weight of the silica-coated titanium oxide particle dispersion-1 prepared in Production Example 1 (3.5 parts by weight as the weight of the silica-coated titanium oxide particles, and 0.6 part by weight as the weight of PVB #2000L), 0.7 part by weight of the Cymel 303, 0.16 part by weight of the cat 4050 (solid content concentration: 32% by weight), 45 parts by weight of MIBK, and 30 parts by weight of t-butanol, so as to yield an even solution of a curing composition. The concentration of all solid contents in this curing composition was measured in the same way as in Production Example 1. The concentration was 5% by weight. The viscosity (25 °C) of this curing composition was 2 mPa·s.

### Example 2

Into a vessel were charged 10 parts by weight of the silica-coated titanium oxide particle dispersion-2 prepared in Production Example 2 (1.5 parts by weight as the weight of the silica-coated titanium oxide particles), 1.6 parts by weight of PVB #2000L, 1.6 parts by weight of the Cymel 303, 0.32 part by weight of the cat 4050 (solid content concentration: 32% by weight), 52 parts by weight of MIBK, and 35 parts by weight of t-butanol, so as to yield an even solution of a curing composition. The concentration of all solid contents in this curing composition was measured in the same way as in Production Example 1. The concentration was 5% by weight. The viscosity (25 °C) of this curing composition was 2 mPa·s.

### Example 3

An even solution of a curing composition was yielded in the same way as in Example 2 except that the PVB #2000L was not charged and the charging amount of the Cymel 303 was set to 3.2 parts by weight. The concentration of all solid contents in this curing composition was measured in the same way as in Production Example 1. The concentration was 5% by weight. The viscosity (25 °C) of this curing composition was 2 mPa·s.

### Example 4

Into a vessel were charged 24 parts by weight of the silica-coated titanium oxide particle dispersion-2 prepared in Production Example 2 (3.5 parts by weight as the weight of the silica-coated titanium oxide particles), 0.35 part by weight of PVB #2000L, 0.35 part by weight of the Cymel 303, 0.16 part by weight of the cat 4050 (solid content concentration: 32% by weight), 45 parts by weight of MIBK, and 30 parts by weight of t-butanol, so as to yield an even solution of a curing composition. The concentration of all solid contents in this curing composition was measured in the same way as in Production Example 1. The concentration was 5% by weight. The viscosity (25 °C) of this curing composition was 2 mPa·s.

### Example 5

An even solution of a curing composition was yielded in the same way as in Example 4 except that the PVB #2000L was not charged and the charging amount of the Cymel 303 was set to 0. 7 part by weight. The concentration of all solid contents in this curing composition was measured in the same way as in Production Example 1. The concentration was 5% by weight. The viscosity (25 °C) of this curing composition was 2 mPa·s.

### Example 6

Into a vessel were charged 36 parts by weight of the silica-coated titanium oxide particle dispersion-2 prepared in Production Example 2 (5.2 parts by weight as the weight of the silica-coated titanium oxide particles), 0.1 part by weight of PVB #2000L, 0.1 part by weight of the Cymel 303, 0.032 part by weight of the cat 4050 (solid content concentration: 32% by weight), 39 parts by weight of MIBK, and 26 parts by weight of t-butanol, so as to yield an even solution of a curing composition. The concentration of all solid contents in this curing composition was measured in the same way as in Production Example 1. The concentration was 5% by weight. The viscosity (25 °C) of this curing composition was 2 mPa·s.

### Example 7

An even solution of a curing composition was yielded in the same way as in Example 6 except that the PVB #2000L was not charged and the charging amount of the Cymel 303 was set to 0.2 part by weight. The concentration of all solid contents in this curing composition was measured in the same way as in Production Example 1. The concentration was 5% by weight. The viscosity (25 °C) of this curing composition was 2 mPa·s.

### Example 8

Into a vessel were charged 40 parts by weight of the coated titanium oxide particle dispersion-3 prepared in Production Example 3 (5.7 parts by weight as the weight of titanium oxide coated with zirconia and alumina, and 0.99 part by weight as the weight of ethylene/propylene oxide), 1.15 parts by weight of the Cymel 303, 0.26 part by weight of the cat 4050 (solid content concentration: 32% by weight), and 59 parts by weight of ethyl lactate, so as to yield an even solution of a curing composition. The concentration of all solid contents in this curing composition was measured in the same way as in Production Example 1. The concentration was 8% by weight. The viscosity (25 °C) of this curing composition was 2 mPa·s.

### Example 9

A curing composition was yielded in the same way as in Example 9 except that 59 parts by weight of propylene glycol monomethyl ether were used as a diluting agent instead of ethyl lactate. The concentration of all solid contents in this curing composition was measured in the same way as in Production Example 1. The concentration was 8% by weight. The viscosity (25 °C) of this curing composition was 2 mPa·s.

### Example 10

Into a vessel were charged 40 parts by weight of the titanium oxide particle coated with zirconia and alumina dispersion-3 prepared in Production Example 3 (5.7 parts by weight as the weight of titanium oxide coated with zirconia and alumina, and 0.99 part by weight as the weight of ethylene/propylene oxide), 1.15 parts by weight of the Cymel 303, 0.26 part by weight of the cat 4050 (solid content concentration: 32% by weight), and 59 parts by weight of propylene glycol monomethyl ether acetate, so as to yield an even solution of a curing composition. The concentration of all solid contents in this curing composition was measured in the same way as in Production Example 1. The concentration was 8% by weight. The viscosity (25 °C) of this curing composition was 2 mPa·s.

### Example 11

A curing composition was yielded in the same way as in Example 10 except that 59 parts by weight of methyl isobutyl ketone were used as a diluting agent instead of propylene glycol monomethyl ether acetate. The concentration of all solid contents in this curing composition was measured in the same way as in Production Example 1. The concentration was 8% by weight. The viscosity (25 °C) of this curing composition was 2 mPa·s.

### Comparative Example 1

An even solution of a curing composition was yielded in the same way as in Example 4 except that the rutile type titanium oxide particle dispersion prepared in Comparative Production Example 1 was used. The concentration of all solid contents in this curing composition was measured in the same way as in Production Example 1. The concentration was 5% by weight. The viscosity (25 °C) of this curing composition was 2 mPa·s.

### Comparative Example 2

An even solution of a curing composition was yielded in the same way as in Comparative Example 1 except that the PVB #2000L was not charged and the charging amount of the Cymel 303 was set to 0.7 part by weight. The concentration of all solid contents in this curing composition was measured in the same way as in Production Example 1. The concentration was 5% by weight. The viscosity (25 °C) of this curing composition was 2 mPa·s.

### Comparative Example 3

An even solution of a curing composition was yielded in the same way as in Example 4 except that the anatase type titanium oxide particle dispersion prepared in Comparative Production Example 2 was used. The concentration of all solid contents in this curing composition was measured in the same way as in Production Example 1. The concentration was 5% by weight. The viscosity (25 °C) of this curing composition was 2 mPa·s.

### Comparative Example 4

An even solution of a curing composition was yielded in the same way as in Comparative Example 3 except that the PVB #2000L was not charged and the charging amount of the Cymel 303 was set to 0.7 part by weight. The concentration of all solid contents in this curing composition was measured in the same way as in Production Example 1. The concentration was 5% by weight. The viscosity (25 °C) of this curing composition was 2 mPa·s.

The composition of the curing composition of each of Examples 1 to 11 and Comparative Examples 1 to 4, the concentration of all solid contents therein, and viscosity thereof are shown in Tables 1 and 2.

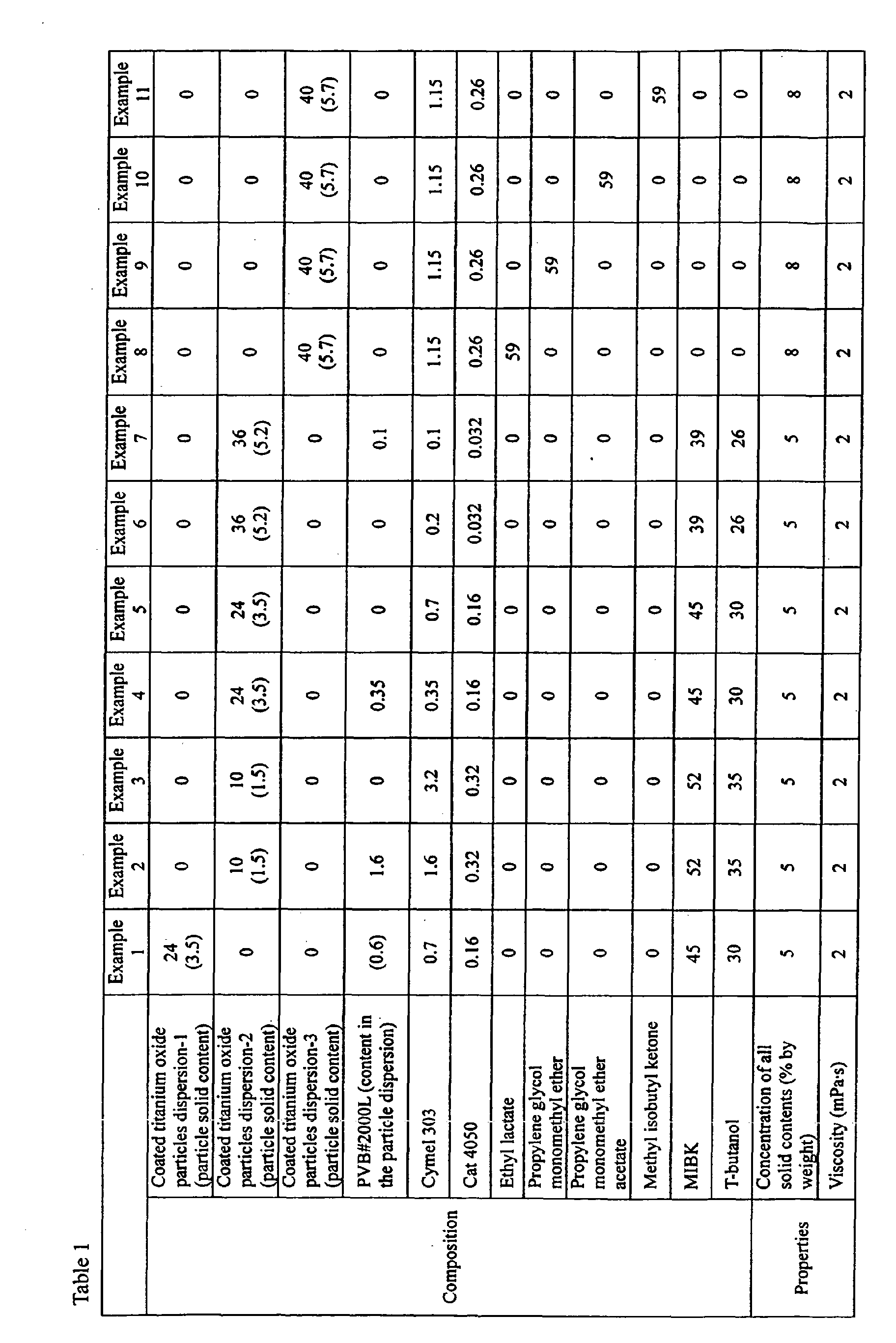

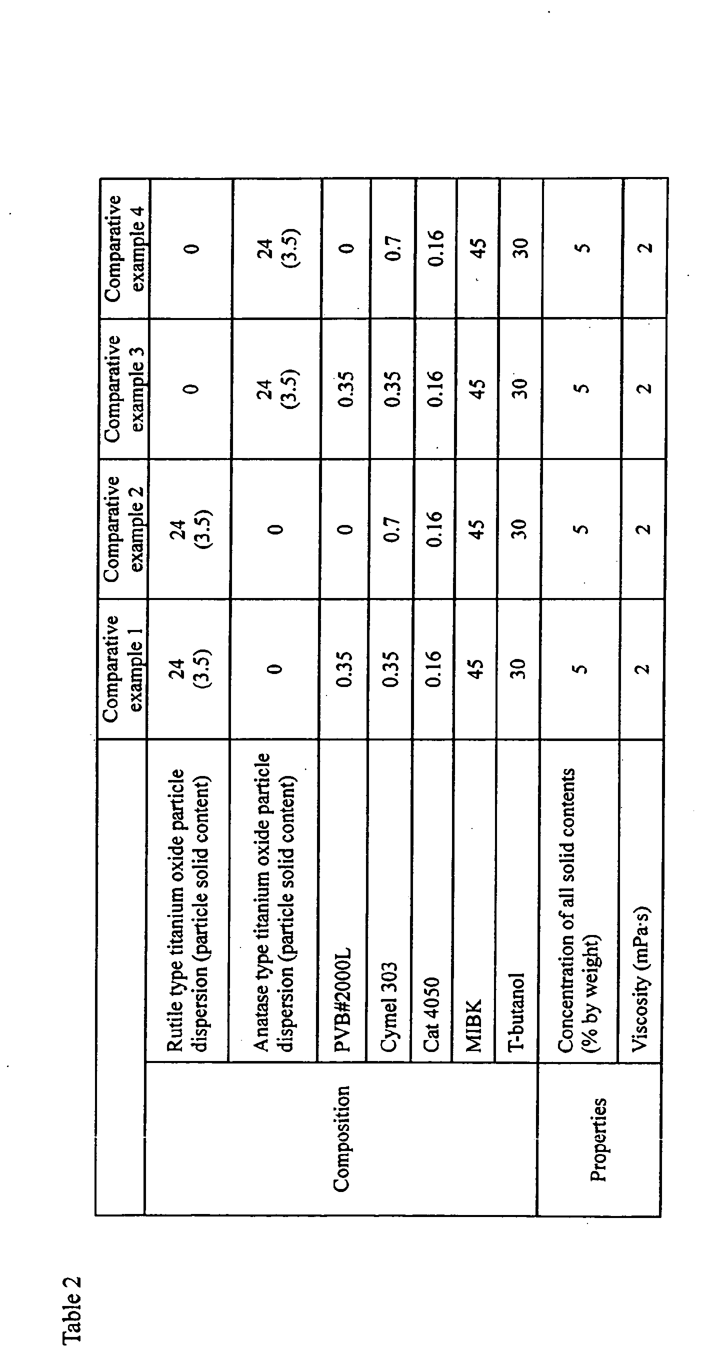

Production examples of the cured film (high-refractive-index cured film) of the invention are described in Examples 12 to 22 and Comparative Examples 5 to 8 hereinafter.

### Examples 12 to 22

### [Evaluation of cured films]

### (1) Preparation of cured films for evaluation

### (1-1) Cured films for evaluating the refractive index.

Cured films for evaluating the refractive index were prepared by applying the curing compositions by methods suitable for the organic solvents used in each curing composition.

Specifically, about each of the curing compositions of Examples 1 to 7, the curing composition prepared in each of Examples shown in Table 1 was applied onto a silicon water with a wire bar coater (#3) so as to have a thickness of about 0.1 µm after being dried (the method being described as "Bar coating" in Tables 3 and 4). Next, an oven was used to heat the composition at 120 °C for 10 minutes, thereby yielding a high-refractive-index cured film.

About each of the curing compositions of Examples 8 to 11, a spin coater (1H-360S model, manufactured by MIKASA Co., Ltd.) was used to apply it. About rotating conditions of the spin coater, the coater was rotated at 300 rpm for 5 seconds, and then rotated further at 2000 rpm for 20 seconds. The composition was applied onto a silicon wafer by spin coating, so as to have a thickness of about 0.1 µm after being dried (the method being described as "Spin coating" in Table 3). Next, an oven was used to heat the composition at 120 °C for 10 minutes, thereby yielding a high-refractive-index cured film.

The refractive indexes of the resultant high-refractive-index cured films were measured under conditions described below. The results are shown in Table 3.

### (1-2) Cured films for evaluating the turbidity, adhesiveness, light resistance, and applying power

Cured films for evaluating the turbidity, adhesiveness, light resistance, and applying power were prepared by applying the curing compositions by methods suitable for the organic solvents used in each curing composition.

Specifically, about each of the curing compositions of Examples 1 to 7, the curing composition prepared in each of Examples shown in Table 1 was applied onto a polyethylene terephthalate (PET) filmA4100 (manufacturedbyTOYOBOCO., LTD., film thickness: 188 µm), a single surface thereof being able to be easily bonded, with a wire bar coater (#3) so as to have a thickness of about 0.1 µm after being dried. The film surface to which the composition was applied was the surface treated for the easy-bonding, or the other surface untreated. In an oven, the composition was then heated at 120 °C for 10 minutes, thereby yielding a high-refractive-index cured film.

About the curing compositions of Examples 8 to 11, high-refractive-index cured films were obtained in the same way as in the (1-1).

The turbidity, adhesiveness, light resistance and applying power of the resultant high-refractive-index cured films were evaluated on the basis of criteria described below. The results are shown in Table 3.

### (2) Method of evaluation

### (2-1) Refractive index

About each of the resultant cured films, an ellipsonmeter was used to measure the refractive index (n_{D}²⁵) thereof about a wavelength of 589 nm at 25 °C.

### (2-2) Turbidity

A haze meter was used to measure the turbidity (haze values) of the resultant cured films, and they were evaluated on the basis of the following criterion:
○: The haze value was 2% or less.
Δ: The haze value was 3% or less.
×: The haze value was 5% or more.

### (2-3) Adhesiveness

About the resultant cured films, a check pattern test according to JIS K5400 was made, and the results were evaluated on the basis of the following criterion:
○: No exfoliation was observed in 100 checkers.
Δ: Exfoliation was observed in 1 to 3 checkers out of 100 checkers.
×: Exfoliation was observed in 4 or more checkers out of 100 checkers.

### (2-4) Light resistance

The reflectance of the resultant cured films was measured with a spectral reflectance measuring device (an auto-printing spectrophotometer U-3410 into which a large-sized sample-chamber integrating-sphere attachment 150-09090 was integrated, manufactured by Hitachi, Ltd.) and evaluated. Specifically, the reflectance of each of the cured film was measured about each wavelength on the basis of the reflectance (100%) of an aluminum-evaporated film. Furthermore, a QUV accelerating weather resistance tester (manufactured by Q-Panel Co.) was used for the cured film, and ultraviolet rays were radiated thereon for 150 hours. Thereafter, the reflectance was measured in the same way, and evaluated on the basis of the following criterion:
○: Before and after the light resistance test, the wavelength shift of the lowest reflectance of the reflectance curve was -50 nm or less, or a decrease in the highest reflectance value was 1% or less.
×: Before and after the light resistance test, the wavelength shift of the lowest reflectance of the reflectance curve was -100 nm or less, or a decrease in the highest reflectance value was 2% or less.

### (2-5) Applying power

The applying power was evaluated from the external appearance of each of the cured films on the basis of the following criterion.
○: The external appearance of the cured film was transparent, and unevenness in color was hardly observed.
×: The external appearance of the cured film was opaque, or unevenness in color was observed.

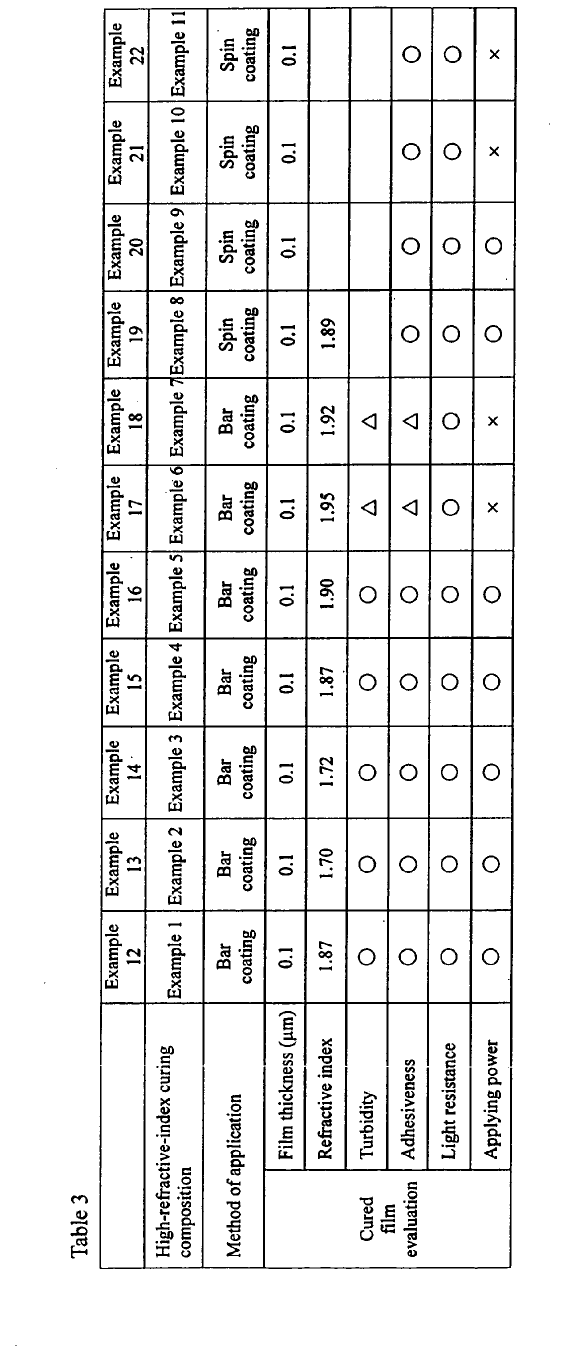

A curing composition was produced, using the silica-coated titanium oxide fine powder (coated titanium oxide particle dispersion-2) of Production Example 2 instead of the titanium oxide fine powder coated with zirconia and alumina and used in Example 19. This curing composition was used to form a cured film in the same way as in Example 19. As a result, in Example 19, using the titanium oxide fine powder coated with zirconia and alumina, the refractive index of the cured film was 1.89. On the other hand, in the case of using the silica-coated titanium oxide fine powder, the refractive index was 1.85.

### Comparative Examples 5 to 8

A cured film was yielded in the same way as in Example 12 except that each of the high-refractive-index curing compositions prepared in Comparative Examples 1 to 4 was used. The evaluation results are shown in Table 4.

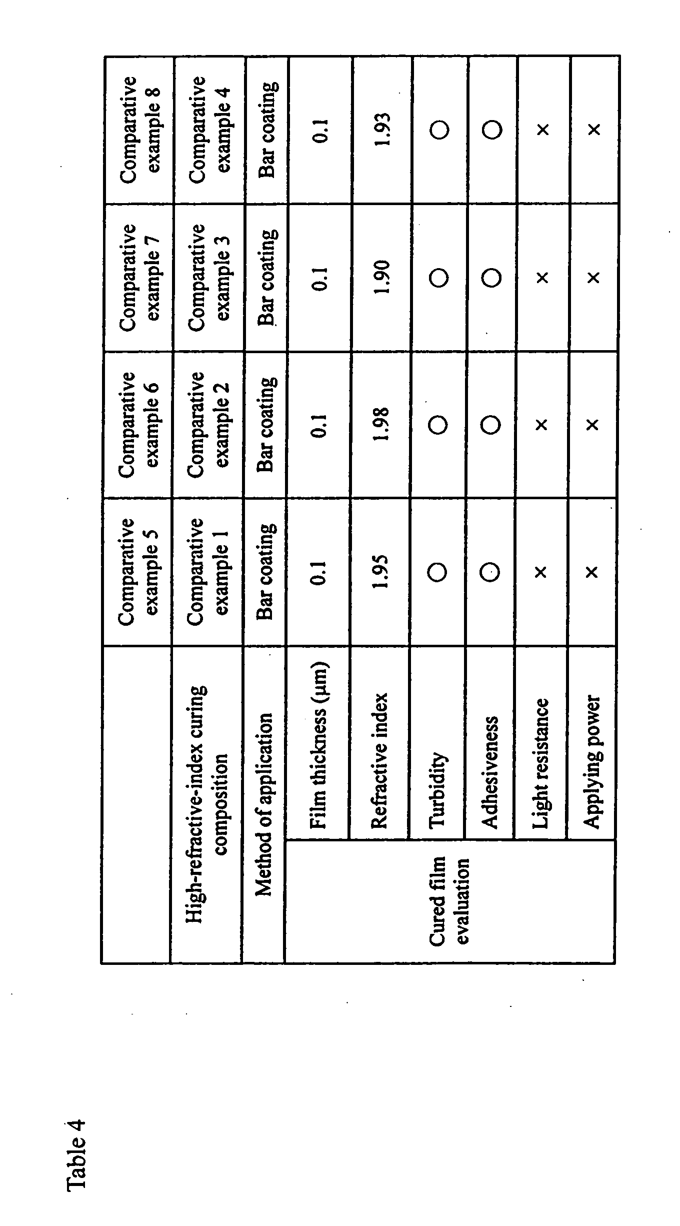

Hereinafter, production examples of the antireflective multilayer body of the invention are described in Examples 23 to 33 and Comparative Examples 9 to 12.

### Example 23

In Example 12, the low-refractive-index curing composition prepared in Production Example 5 was applied onto the high-refractive-index cured film obtained by the method of the (1-2) with a wire bar coater (#3), and then heat-cured at 120 °C for 1 hour to form a low-refractive-index cured film. The film thickness of this low-refractive-index cured film was roughly calculated from the reflectance measurement. The thickness was about 0.1 µm. In this way, obtained was an antireflective multilayer body composed of the high-refractive-index cured film (about 0.1 µm) and the low-refractive-index cured film (about 0.1 µm). Furthermore, the antireflection, turbidity, adhesiveness and light resistance of thisantireflective multilayer body were evaluated on the basis of criteria described below. The results are shown in Table 5.

### (1) Antireflection

The antireflection of the resultant antireflective multilayer body was evaluated by measuring the reflectance thereof within the wavelength range of 340 to 700 nmwith a spectral reflectance measuring device (an auto-printing spectrophotometer U-3410 into which a large-sized sample-chamber integrating-sphere attachment 150-09090 was integrated, manufactured by Hitachi, Ltd.). Specifically, the reflectance of the antireflective multilayer body (antireflection film) was measured about each wavelength on the basis of the reflectance (100%) of an aluminum-evaporated film. The antiref lection was evaluated from the reflectance about light having a wavelength of 550 nm, among the resultant reflectances, on the basis of the following criterion:
○: The reflectance was 0.5% or less.
Δ: The reflectance was 1% or less.
×: The reflectance was 2% or less.

### (2) Turbidity

The turbidity was evaluated in the same way as in Examples 12 to 22 and Comparative Examples 5 to 8.

### (3) Adhesiveness

The adhesiveness was evaluated in the same way as in Examples 12 to 22 and Comparative Examples 5 to 8.

### (4) Light resistance

The reflectance was measured in the same way as in Examples 12 to 22 and Comparative Examples 5 to 8, and the light resistance was evaluated on the basis of the following criterion:
○: Before and after the light resistance test, the wavelength shift of the lowest reflectance of the reflectance curve was -50 nm or less, or an increase in the lowest reflectance value was 0.5% or less.
×: Before and after the light resistance test, the wavelength shift of the lowest reflectance of the reflectance curve was -100 nm or less, or an increase in the lowest reflectance value was 1% or less.

### Examples 24 to 33

An antireflective multilayer body was yielded in the same way as in Example 23 except that each of the high-refractive-index cured films obtained in Examples 12 to 22 was used. The evaluation results are shown in Table 5.

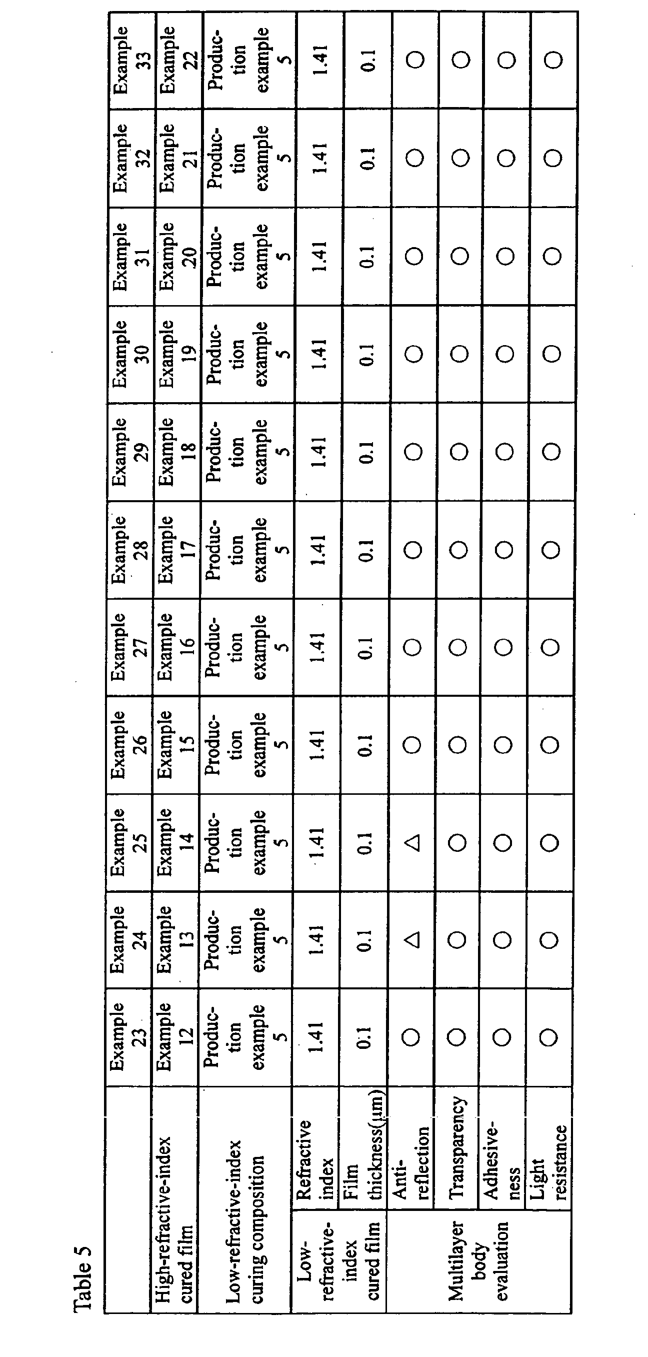

### Comparative Examples 9 to 12

An antireflective multilayer body was yielded in the same way as in Example 23 except that each of the high-refractive-index cured films obtained in Comparative Examples 5 to 8 was used. The evaluation results are shown in Table 6.

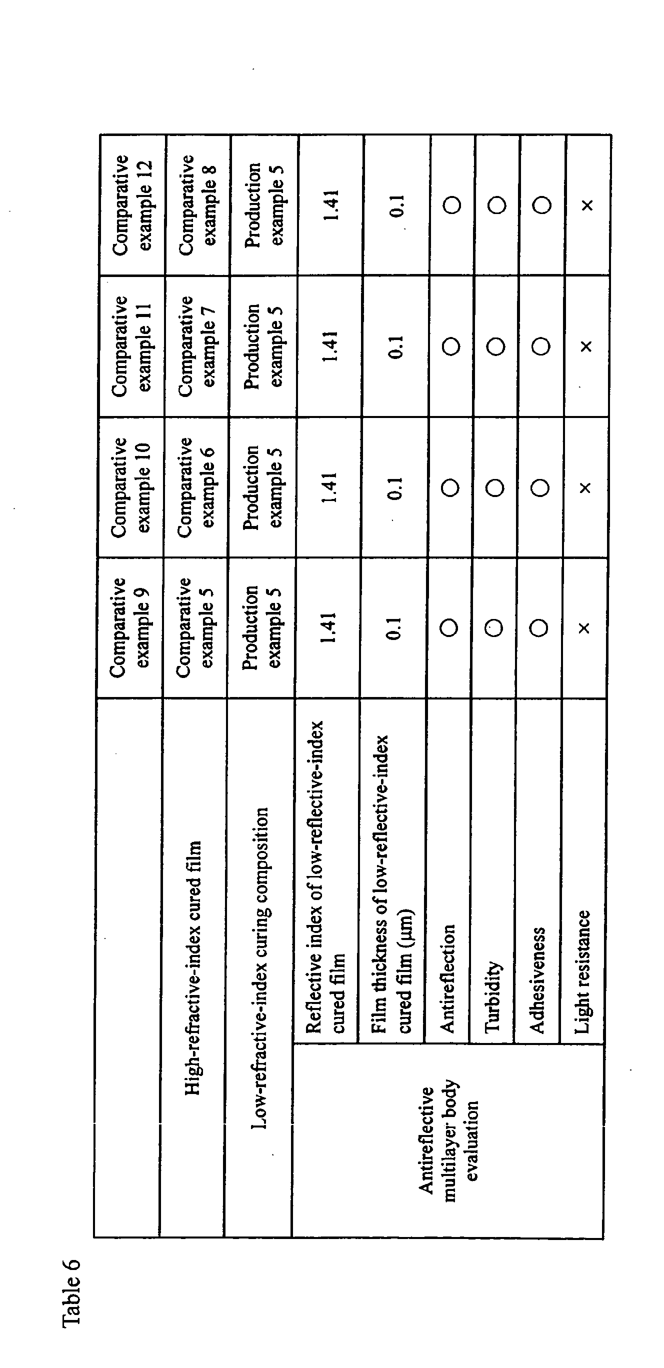

### Industrial Applicability

The curing composition, the cured product and the antireflective multilayer body of the present invention can be usefully utilized in various antireflection films of various optical lenses such as a Fresnel lens, a lenticular lens and a micro-lens array of a CCD, a lens section of a camera, a screen display section of a television (CRT), and a color filter in a liquid crystal display device.

## Claims

1. A curing composition, comprising:
100 parts by weight of (1) titanium oxide particles coated with oxide of one or more metal elements selected from the group consisting of silicon, aluminum, titanium, zirconium, tin, antimony and zinc,
1 to 300 parts by weight of (2) a curing compound, and
0.1 to 30 parts by weight of (3) a curing catalyst.

2. The curing composition according to claim 1, which further comprises 1 to 150 parts by weight of a hydroxyl-containing compound.

3. The curing composition according to claim 1, wherein the curing compound is a melamine compound.

4. The curing composition according to any one of claims 1 to 3, which further comprises 100 to 10000 parts by weight of an organic solvent.

5. The curing composition according to claim 4, wherein the organic solvent comprises one or more solvents selected from the group consisting of ethyl lactate, propylene glycol monomethyl ether, and n-butanol.

6. A cured film which has a refractive index of 1.60 or more and is formed by curing the curing composition according to claim 1.

7. An antireflective multilayer body, comprising:
a substrate layer,
a cured film according to claim 6 and,
a cured film of a lower refractive index than that of the cured film according to claim 6.

8. The antireflective multilayer body according to claim 7, wherein the low-refractive-index cured film is a cured body of a composition containing a fluorine-containing polymer.

9. The antireflective multilayer body according to claim 7, wherein the low-refractive-index cured film is a cured body of a composition containing the following components:
(A) a fluorine-containing polymer having a hydroxyl group,
(B) a curing compound having a functional group reactive with a hydroxyl group and
(C) a curing catalyst.

10. The antireflective multilayer body according to any one of claims 7 to 9, wherein the shape of the substrate layer is a film, plate or lens shape.
